# EUROPEAN PATENT APPLICATION

(11) **EP 2 136 558 A2**
(43) Date of publication of application: **23.12.2009**
(21) Application number: 09162980.8
(22) Date of filing: 17.06.2009
(51) Int. Cl.: H04N 7/01, H04N 5/45

(54) **Information processing device and information processing method, and storage medium**

(30) Priority: 19.06.2008 JP 2008160296
(71) Applicant: Sony Corporation, Tokyo 108-0075 (JP)
(72) Inventor: Ichikawa, Daisuke, Tokyo 108-0075 (JP); Tago, Takashi, Tokyo 108-0075 (JP); Nakaya, Hideo, Tokyo 108-0075 (JP); Kondo, Tetsujiro, Tokyo 108-0075 (JP)
(74) Representative: Beder, Jens

(57) **Abstract**

An information processing device includes an input section configured to input a plurality of types of video signals; and a timing controller configured to perform, separately for each of split regions that are obtained by splitting a display region of a display device, control of timing at which a corresponding one of videos corresponding to the plurality of types of video signals is displayed in the split region.

## Description

### BACKGROUND OF THE INVENTION

### 1. Field of the Invention

The present invention relates to an information processing device and an information processing method, and a storage medium having stored therein a program, and, more particularly, to an information processing device and an information processing method that can display video signals having different scanning frequencies separately from one another on a single display, and a storage medium having stored therein a program.

### 2. Description of the Related Art

Hitherto, displays to which video signals having different scanning frequencies can be input have existed. Such displays perform internal conversion so that the scanning frequencies of output video signals are set to a fixed value regardless of the scanning frequencies of input video signals, and display the output video signals. Examples of internal conversion include internal conversion in which internal format conversion is simply performed, and internal conversion that involves signal processing such as scanning-frequency conversion (for example, see Japanese Unexamined Patent Application Publication No. 7-59054 incorporated by reference). For example, video signals that are used in movies are recorded with a scanning frequency of 24 Hz. A technology for converting the scanning frequency of 24 Hz into a scanning frequency of 60 Hz that is a typical scanning frequency of video signals and so forth have been recognized.

Video signals that have been subjected to various types of internal conversion such as scanning-frequency conversion are displayed as videos that appear visually different from one another. Accordingly, in the related art, in order to simultaneously compare the videos with one another, typically, the respective videos are displayed on a plurality of displays.

### SUMMARY OF THE INVENTION

For this reason, it is desired that video signals having different scanning frequencies be displayed separately from one another on a single display. However, there are circumstances in which the technologies of the related art do not sufficiently meet such a desire.

In view of the above-described circumstances, it is desirable to display video signals having different scanning frequencies separately from one another on a single display.

An information processing device according to an embodiment of the present invention includes the following elements: an input section configured to input a plurality of types of video signals; and a timing controller configured to perform, separately for each of split regions that are obtained by splitting a display region of a display device, control of timing at which a corresponding one of videos corresponding to the plurality of types of video signals is displayed in the split region.

The display device may be a pixel-type display device. Displaying with display elements constituting the pixel-type display device may be controlled by driving source drivers and gate drivers. Each of the source drivers and each of the gate drivers may be assigned to a corresponding one of the split regions. The timing controller may control, for each of the split regions, timing at which a corresponding one of the source drivers and a corresponding one of the gate drivers are driven.

N split regions may exist as the split regions (wherein n is an integer value that is equal to or larger than two). Each of the gate drivers may be assigned as a gate driver for a corresponding one of the n split regions. One of the source drivers may be assigned as a source driver for a group of x split regions among the n split regions (wherein x is an integer value that is equal to or larger than two and that is equal to or smaller than n). Each of the gate drivers may be assigned to a corresponding one of the x split regions to which the source driver is assigned. The timing controller may perform control of supplying signals from the source driver to the gate drivers in respective horizontal one-line drive periods of the gate drivers in such a manner that the signals are divided using time division and prohibited from overlapping one another.

The plurality of types of video signals may include two or more video signals having different scanning frequencies.

The information processing device according to the embodiment of the present invention may further include a conversion section configured to convert a scanning frequency of an input video signal.

The conversion section may convert the scanning frequency of the input video signal using a plurality of techniques as techniques for converting the scanning frequency of the input video signal, and may select, from among a plurality of types of video signals that are obtained as a result of conversion, a video signal that is to be displayed in each of the split regions.

An information processing method and a storage medium having stored therein a program according to embodiments of the present invention are a method and a storage medium that each correspond to the above-described information processing device according to the embodiment of the present invention.

With any of the information processing device and the information processing method, and the storage medium having stored therein a program according to the embodiments of the present invention, for each of the split regions that are obtained by splitting the display region of the display device, control of timing at which a corresponding one of videos corresponding to the plurality of types of video signals is displayed in the split region is performed.

As described above, according to any of the embodiments of the present invention, video signals having different scanning frequencies can be displayed separately from one another on a single display device (a display). As a result, the video signal having different scanning frequencies can be compared with one another on the single display having the same characteristics.

### BRIEF DESCRIPTION OF THE DRAWINGS

Fig. 1 is a block diagram of an information processing device of the related art that performs scanning-frequency conversion;
Fig. 2 is a functional block diagram showing an example of a functional configuration of an information processing device according to an embodiment of the present invention;
Fig. 3 is a functional block diagram showing a detailed example of the functional configuration of the information processing device shown in Fig. 2;
Fig. 4 is a timing diagram showing an example in which a source driver 23-1 and a gate driver 24-1 that are shown in Fig. 3 are driven;
Fig. 5 is a timing diagram showing an example in which a source driver 23-3 and a gate driver 24-3 that are shown in Fig. 3 are driven;
Fig. 6 is a functional block diagram showing a detailed example, which is different from the example shown in Fig. 3, of the functional configuration of the information processing device shown in Fig. 2; and
Fig. 7 is a timing diagram showing an example in which a source driver 23-13, and gate drivers 24-1 and 24-3 that are shown in Fig. 6 are driven.

### DESCRIPTION OF THE PREFERRED EMBODIMENTS

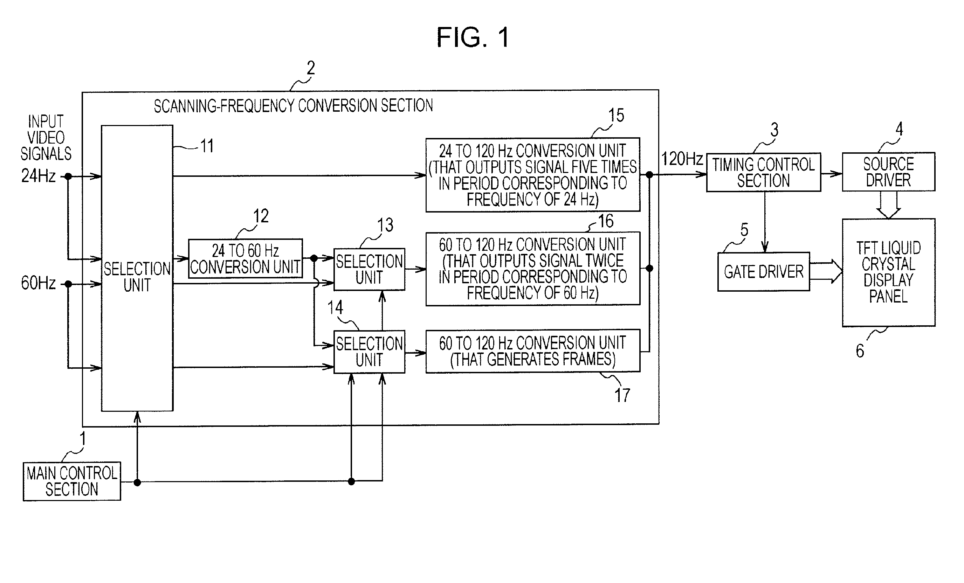

First, a technology of the related art will be described with reference to Fig. 1 in order to easily understand the present invention and to clear the background of the present invention.

Fig. 1 is a block diagram showing an example of a configuration of an information processing device of the related art.

The information processing device of the related art of the example shown in Fig. 1 includes a main control section 1, a scanning-frequency conversion section 2, a timing control section 3, a source driver 4, a gate driver 5, and a thin film transistor (TFT) liquid crystal display panel 6. Furthermore, the scanning-frequency conversion section 2 includes selection units 11, 13, and 14, a 24 to 60 Hz conversion unit 12, a 24 to 120 Hz conversion unit 15 (that outputs a video signal five times in a period corresponding to a frequency of 24 Hz), a 60 to 120 Hz conversion unit 16 (that outputs a video signal twice in a period corresponding to a frequency of 60 Hz), and a 60 to 120 Hz conversion unit 17 (that generates frames).

Input video signals (having frequencies of 24 Hz and 60 Hz in the example shown in Fig. 1) are input to the selection unit 11 that is provided in the scanning-frequency conversion section 2.

The selection unit 11 selects, in accordance with control performed by the main control section 1, the 24 to 60 Hz conversion unit 12 or the 24 to 120 Hz conversion unit 15 as a unit to which the input video signal having a frequency of 24 Hz is to be output. In other words, the input video signal having a frequency of 24 Hz is supplied to the 24 to 60 Hz conversion unit 12 or the 24 to 120 Hz conversion unit 15.

Furthermore, the selection unit 11 selects the selection unit 13 or 14 as a unit to which the input video signal having a frequency of 60 Hz is to be output. In other words, the input video signal having a frequency of 60 Hz is supplied to the selection unit 13 or 14.

The 24 to 60 Hz conversion unit 12 converts the scanning frequency of the input video signal having a frequency of 24 Hz that is supplied from the selection unit 11 into 60 Hz to obtain a video signal having a frequency of 60 Hz. Then, the 24 to 60 Hz conversion unit 12 supplies the video signal having a frequency of 60 Hz to the selection units 13 and 14.

The input video signal having a frequency of 60 Hz and the video signal having a frequency of 60 Hz that was converted from the input video signal having a frequency of 24 Hz are input to the selection unit 13. The selection unit 13 selects, in accordance with control performed by the main control section 1, one of the two input video signals having a frequency of 60 Hz, and supplies the selected video signal to the 60 to 120 Hz conversion unit 16.

The input video signal having a frequency of 60 Hz and the video signal that was converted from the input video signal having a frequency of 24 Hz are input to the selection unit 14. The selection unit 14 selects, in accordance with control performed by the main control section 1, one of the two input video signals having a frequency of 60 Hz, and supplies the selected video signal to the 60 to 120 Hz conversion unit 17.

The 24 to 120 Hz conversion unit 15 converts the scanning frequency of the input video signal having a frequency of 24 Hz into 120 Hz to obtain a video signal having a frequency of 120 Hz. Then, the 24 to 120 Hz conversion unit 15 supplies the video signal having a frequency of 120 Hz to the timing control section 3. Note that, as a conversion technique that is performed by the 24 to 120 Hz conversion unit 15, a technique is employed, in which frames constituting the video signal having a frequency of 24 Hz are output five times in a period corresponding to the frequency of 24 Hz, thereby converting the video signal having a frequency of 24 Hz into a video signal having a frequency of 120 Hz, as described in brackets shown in Fig. 1.

The 60 to 120 Hz conversion unit 16 converts the scanning frequency of the input video signal having a frequency of 60 Hz into 120 Hz to obtain a video signal having a frequency of 120 Hz. Then, the 60 to 120 Hz conversion unit 16 supplies the video signal having a frequency of 120 Hz to the timing control section 3. Note that, as a conversion technique that is performed by the 60 to 120 Hz conversion unit 16, a technique is employed, in which frames constituting the video signal having a frequency of 60 Hz are output twice in a period corresponding to the frequency of 60 Hz, thereby converting the video signal having a frequency of 60 Hz into a video signal having a frequency of 120 Hz, as described in brackets shown in Fig. 1.

The 60 to 120 Hz conversion unit 17 converts the scanning frequency of the input video signal having a frequency of 60 Hz into 120 Hz to obtain a video signal having a frequency of 120 Hz. Then, the 60 to 120 Hz conversion unit 17 supplies the video signal having a frequency of 120 Hz to the timing control section 3. Note that, as a conversion technique that is performed by the 60 to 120 Hz conversion unit 17, a technique is employed, in which new frames are predicted and generated using an appropriate technique on the basis of the video signal having a frequency of 60 Hz, and in which the new frames are inserted between respective frames constituting the input video signal having a frequency of 60 Hz, thereby converting the video signal having a frequency of 60 Hz into a video signal having a frequency of 120 Hz, as described in brackets shown in Fig. 1.

The timing control section 3 supplies the supplied input video signals having a frequency of 120 Hz to the source driver 4 and the gate driver 5. Accordingly, videos corresponding to the input video signals having a frequency of 120 Hz are displayed on the TFT liquid crystal display panel 6 in accordance with control that is performed by the source driver 4 and the gate driver 5.

As in the above-described example shown in Fig. 1, a display of the related art to which video signals having different frequencies can be input performs internal conversion so that the scanning frequencies of output video signals are set to a fixed value regardless of the scanning frequencies of the input video signals, and displays the output video signals.

Examples of internal conversion include internal conversion in which internal format conversion is simply performed, and internal conversion that involves signal processing such as scanning-frequency conversion as in the above-described example. In addition, a technique in which frames are repeatedly displayed, such as 2-3 pull down or 2-2 pull down, a technique in which frames to be inserted are predicted and generated, and so forth exist as techniques for scanning-frequency conversion.

Furthermore, a blurred afterimage that is caused because a response speed is not sufficient is considered as one of problems of a liquid crystal display. In order to solve this problem, a technique has also been developed, in which the scanning frequency of a video signal is converted into a frequency that is equal to or higher than a frequency of the video signal at a point in time at which the video signal is input, and in which the video signal is output. Accordingly, videos corresponding to video signals whose scanning frequencies have been converted using various types of internal conversion such as scanning-frequency conversion appear visually different from one another. However, it is difficult to simultaneously compare videos corresponding to output video signals with one another on a display that is provided for a case in which the scanning frequencies of the output video signals are set to a fixed value as in the example shown in Fig. 1.

Two techniques, i.e., a technique in which a plurality of displays that are driven at different scanning frequencies are disposed, and a technique in which videos are displayed separately from one another on a single display, exist as techniques of the related art for comparing and evaluating video signals having different scanning frequencies.

As one example in which the first one of the techniques of the related art is realized, a technique can be employed, in which one display is formed by bonding displays that are driven at different scanning frequencies together. However, in this technique, a space in which a driver is disposed is necessary for each of the displays, and, as the degree of parallelism of the displays is increased, it is difficult to form a single display having no physical boundary. Furthermore, the displays have individual differences, and compensation for the characteristics of viewing angle is also important. An extra task of standardizing the characteristics of the displays so that the displays have the same quality is necessary, and accurate comparison is difficult.

In a case in which the second one of the techniques is employed, when a display in which scanning frequencies of output video signals are set to a fixed value is used, it is necessary that a video signal having a low scanning frequency be driven at timing that is the same as timing at which a video signal having a high scanning frequency is driven. Accordingly, a method in which the same signal is driven at a plurality of times, a technique in which black insertion is performed to emulate impulse emission as in the case of a cathode ray tube (CRT) display, and so forth are necessary. Thus, it is difficult to compare and evaluate video signals having different scanning frequencies in a state in which the video signals are completely reproduced using the original different scanning frequencies. The reason for this is that no system configuration has been considered as a comprehensive display device for video signals having different scanning frequencies.

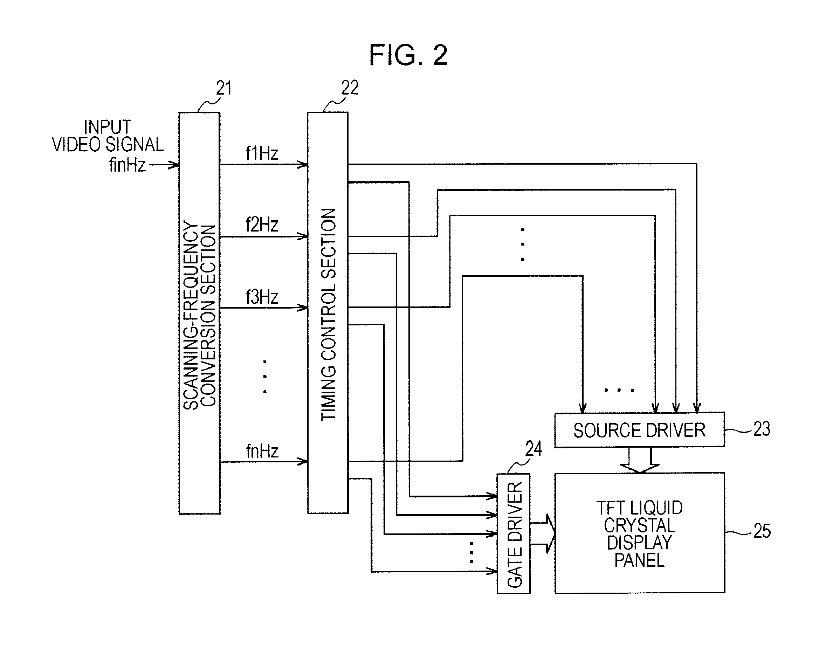

Therefore, the present inventors have invented an information processing device that can display video signals having different scanning frequencies separately from one another on a single display or the like. Embodiments of the present invention will be described below with reference to the drawings starting with Fig. 2.

Fig. 2 is a functional block diagram showing an example of a configuration of an information processing device according to an embodiment of the present invention.

The information processing device of the example shown in Fig. 2 includes a scanning-frequency conversion section 21, a timing control section 22, a source driver 23, a gate driver 24, and a TFT liquid crystal display panel 25.

An input video signal having a scanning frequency of fin Hz is input to the scanning-frequency conversion section 21.

The scanning-frequency conversion section 21 converts a scanning frequency of fin Hz that is the scanning frequency of the input video signal into scanning frequencies of f1 Hz to fn Hz (wherein n is an integer value that is equal to or larger than two) to obtain video signals having the scanning frequencies of f1 Hz to fn Hz. The scanning-frequency conversion section 21 supplies the respective video signals having the scanning frequencies of f1 Hz to fn Hz to the timing control section 22. Note that a scanning frequency of fp Hz (wherein p is any integer value from one to n) and a scanning frequency of fq Hz (wherein q is any integer value from one to n other than p) are not necessarily different frequencies. In other words, there is a case in which a scanning-frequency conversion technique that is used for internal conversion which is performed by the scanning-frequency conversion section 21 may be different for each of the scanning frequencies of fp Hz and fq Hz.

The timing control section 22 performs conversion on each of the video signals having the scanning frequencies of f1 Hz to fn Hz in order to be suitable for an arbitrary scanning frequency and a panel input interface. Then, the timing control section 22 supplies, to the source driver 23 and the gate driver 24, respective video signals that are obtained by conversion.

Accordingly, the TFT liquid crystal display panel 25 can simultaneously display, in accordance with control that is performed by the source driver 23 and the gate driver 24, the video signals that are obtained using different scanning-frequency conversion techniques in respective display regions that are obtained by splitting a single display screen.

In this case, when the number of pixels of the TFT liquid crystal display panel 25 is not sufficient for the total number of pixels that form the input video signal having the scanning frequency of fin Hz and the number of display regions using split screen, it is necessary to include a buffer in the scanning-frequency conversion section 21 or the timing control section 22, and to display video signals that are stored in the buffer in arbitrary frames constituting the input video signal having the scanning frequency of fin Hz.

Next, some specific examples of the configuration of the information processing device of the example shown in Fig. 2 will be described.

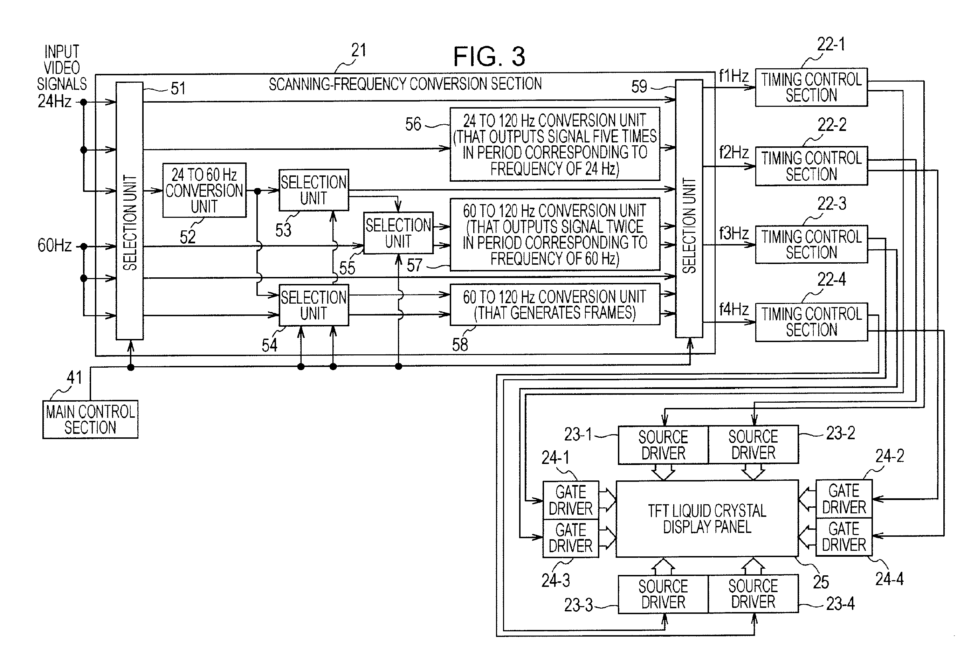

Fig. 3 is a functional block diagram showing a detailed example of a functional configuration of the information processing device of the example shown in Fig. 2. In the example shown in Fig. 3, it is supposed that the number of display regions n using split screen of the TFT liquid crystal display panel 25 is four. Furthermore, in the example shown in Fig. 3, each of the scanning frequencies of input video signals is converted from 24 Hz or 60 Hz to 24 Hz, 60 Hz, or 120 Hz.

Herein, a source driver 23-k (wherein k is an integer value from one to n) and a gate driver 24-k are considered as a pair, and the TFT liquid crystal display panel 25 includes n, which is equal to the number of display regions n using split screen, pairs of the source driver 23-k and the gate driver 24-k. In the example shown in Fig. 3, because the equation n = 4 holds true, the number of display regions using split screen of the TFT liquid crystal display panel 25 is four. Accordingly, as shown in Fig. 3, four pairs, i.e., a pair of a source driver 23-1 and a gate driver 24-1, a pair of a source driver 23-2 and a gate driver 24-2, a pair of a source driver 23-3 and a gate driver 24-3, and a pair of a source driver 23-4 and a gate driver 24-4, exist.

The information processing device of the example shown in Fig. 3 includes a main control section 41, the scanning-frequency conversion section 21, timing control sections 22-1 to 22-4, the source drivers 23-1 to 23-4, the gate drivers 24-1 to 24-4, and the TFT liquid crystal display panel 25.

The scanning-frequency conversion section 21 includes selection units 51, 53, 54, 55, and 59, a 24 to 60 Hz conversion unit 52, a 24 to 120 Hz conversion unit 56 (that outputs a video signal five times in a period corresponding to a frequency of 24 Hz), a 60 to 120 Hz conversion unit 57 (that outputs a video signal twice in a period corresponding to a frequency of 60 Hz), and a 60 to 120 Hz conversion unit 58 (that generates frames).

Input video signals (having frequencies of 24 Hz and 60 Hz in the example shown in Fig. 3) are input to the selection unit 51 that is provided in the scanning-frequency conversion section 21.

The selection unit 51 selects, in accordance with control performed by the main control section 41, one unit from among the selection unit 59, the 24 to 120 Hz conversion unit 56, and the 24 to 60 Hz conversion unit 52 as a unit to which the input video signal having a frequency of 24 Hz is to be output. In other words, the input video signal having a frequency of 24 Hz is supplied to the selection unit 59, the 24 to 60 Hz conversion unit 52, or the 24 to 120 Hz conversion unit 56.

The 24 to 60 Hz conversion unit 52 converts the scanning frequency of the input video signal having a frequency of 24 Hz that is supplied from the selection unit 51 into 60 Hz to obtain a video signal having a frequency of 60 Hz. Then, the 24 to 60 Hz conversion unit 52 supplies the video signal having a frequency of 60 Hz to the selection units 53 and 54.

The selection unit 53 selects the selection unit 59 or 55 as a unit to which the video signal having a frequency of 60 Hz that was converted from the input video signal having a frequency of 24 Hz. In other words, the input video signal having a frequency of 60 Hz is supplied to the selection unit 59 or 55.

The input video signal having a frequency of 60 Hz and the video signal having a frequency of 60 Hz that was converted from the input video signal having a frequency of 24 Hz are input to the selection unit 54. The selection unit 54 selects, in accordance with control performed by the main control section 41, one of the two input video signals having a frequency of 60 Hz, and supplies the selected video signal to the 60 to 120 Hz conversion unit 58.

The input video signal having a frequency of 60 Hz and the video signal having a frequency of 60 Hz that was converted from the input video signal having a frequency of 24 Hz are input to the selection unit 55. The selection unit 55 selects, in accordance with control performed by the main control section 41, one of the two input video signals having a frequency of 60 Hz, and supplies the selected video signal to the 60 to 120 Hz conversion unit 57.

The 24 to 120 Hz conversion unit 56 converts the scanning frequency of the input video signal having a frequency of 24 Hz into 120 Hz to obtain a video signal having a frequency of 120 Hz. Then, the 24 to 120 Hz conversion unit 56 supplies the video signal having a frequency of 120 Hz to the selection unit 59. Note that, as a conversion technique that is performed by the 24 to 120 Hz conversion unit 56, a technique is employed, in which frames constituting the video signal having a frequency of 24 Hz are output five times in a period corresponding to the frequency of 24 Hz, thereby converting the video signal having a frequency of 24 Hz into a video signal having a frequency of 120 Hz, as described in brackets shown in Fig. 3.

The 60 to 120 Hz conversion unit 57 converts the scanning frequency of the input video signal having a frequency of 60 Hz into 120 Hz to obtain a video signal having a frequency of 120 Hz. Then, the 60 to 120 Hz conversion unit 57 supplies the video signal having a frequency of 120 Hz to the selection unit 59. Note that, as a conversion technique that is performed by the 60 to 120 Hz conversion unit 57, a technique is employed, in which frames constituting the video signal having a frequency of 60 Hz are output twice in a period corresponding to the frequency of 60 Hz, thereby converting the video signal having a frequency of 60 Hz into a video signal having a frequency of 120 Hz, as described in brackets shown in Fig. 3.

The 60 to 120 Hz conversion unit 58 converts the scanning frequency of the input video signal having a frequency of 60 Hz into 120 Hz to obtain a video signal having a frequency of 120 Hz. Then, the 60 to 120 Hz conversion unit 58 supplies the video signal having a frequency of 120 Hz to the selection unit 59. Note that, as a conversion technique that is performed by the 60 to 120 Hz conversion unit 58, a technique is employed, in which new frames are predicted and generated using an appropriate technique on the basis of the video signal having a frequency of 60 Hz, and in which the new frames are inserted between respective frames constituting the video signal having a frequency of 60 Hz, thereby converting the video signal having a frequency of 60 Hz into a video signal having a frequency of 120 Hz, as described in brackets shown in Fig. 3.

In this manner, eight types of video signals that were converted using different scanning-frequency conversion techniques, that have different scanning frequencies, or that were converted using different scanning-frequency conversion techniques and that have different scanning frequencies are supplied to the selection unit 59.

The selection unit 59 selectively supplies, in accordance with control performed by the main control section 41, some of the eight types of video signals as video signals having the scanning frequencies of f1 Hz to f4 Hz to the respective timing control sections 22-1 to 22-4.

The timing control section 22-1 supplies the supplied video signal having the scanning frequency of f1 Hz to the pair of the source driver 23-1 and the gate driver 24-1. Accordingly, a video corresponding to the input video signal having the scanning frequency of f1 Hz is displayed, in accordance with control performed by the pair of the source driver 23-1 and the gate driver 24-1, in an upper-left display region among display regions that are obtained by splitting the display screen of the TFT liquid crystal display panel 25 in four.

The timing control section 22-2 supplies the supplied video signal having the scanning frequency of f2 Hz to the pair of the source driver 23-2 and the gate driver 24-2. Accordingly, a video corresponding to the input video signal having the scanning frequency of f2 Hz is displayed, in accordance with control performed by the pair of the source driver 23-2 and the gate driver 24-2, in an upper-right display region among the display regions that are obtained by splitting the display screen of the TFT liquid crystal display panel 25 in four.

The timing control section 22-3 supplies the supplied video signal having the scanning frequency of f3 Hz to the pair of the source driver 23-3 and the gate driver 24-3. Accordingly, a video corresponding to the input video signal having the scanning frequency of f3 Hz is displayed, in accordance with control performed by the pair of the source driver 23-3 and the gate driver 24-3, in a lower-left display region among the display regions that are obtained by splitting the display screen of the TFT liquid crystal display panel 25 in four.

The timing control section 22-4 supplies the supplied video signal having the scanning frequency of f4 Hz to the pair of the source driver 23-4 and the gate driver 24-4. Accordingly, a video corresponding to the input video signal having the scanning frequency of f4 Hz is displayed, in accordance with control performed by the pair of the source driver 23-4 and the gate driver 24-4, in a lower-right display region among the display regions that are obtained by splitting the display screen of the TFT liquid crystal display panel 25 in four.

In this manner, one source driver 23-k and one gate driver 24-k are considered as a pair, and four, which is equal to the number of display regions using split screen, pairs of the source driver 23-k and the gate driver 24-k can be applied to drive the TFT liquid crystal display panel 25. In this case, each of the video signals having different scanning frequencies can be input to a corresponding one of the pairs. Accordingly, the video signals having different scanning frequencies can be displayed in the respective display regions that are obtained by splitting the display screen of the single TFT liquid crystal display panel 25 having the same characteristics in four. Note that, herein, the video signals having different scanning frequencies broadly include not only video signals in a case in which the scanning frequencies are different from one another but also video signals in a case in which methods for converting the scanning frequencies such as internal conversion are different from one another even when the scanning frequencies are the same.

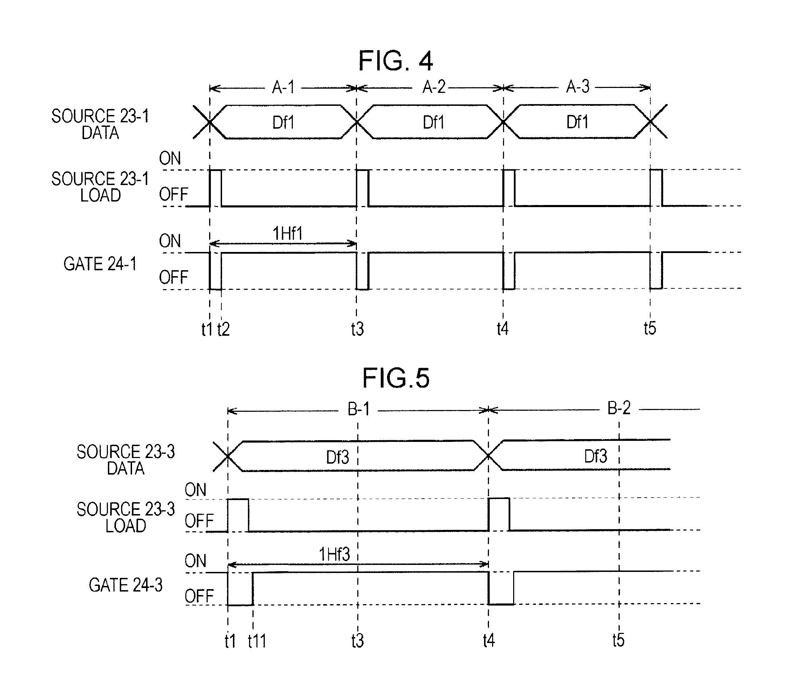

Next, an example in which the pair of the source driver 23-1 and the gate driver 24-1 that are illustrated in the example shown in Fig. 3 is driven and an example in which the pair of the source driver 23-3 and the gate driver 24-3 is driven will be described with reference to Figs. 4 and 5.

Fig. 4 is a timing diagram for explaining the example in which the pair of the source driver 23-1 and the gate driver 24-1 is driven.

A timing chart with an item "Source 23-1 Data" that is shown in the top row of Fig. 4 is a timing chart of data that is to be written into the source driver 23-1, i.e., data corresponding to the video signal having the scanning frequency of f1 Hz. A timing chart with an item "Source 23-1 Load" that is shown in the middle row of Fig. 4 is a timing chart of a signal showing a load state (on-state/off-state) of the source driver 23-1. A timing chart with an item "Gate 24-1" that is shown in the bottom row of Fig. 4 is a timing chart of a signal showing a state (on-state/off-state) of the gate driver 24-1.

Operations based on the signals that are shown in the respective timing charts are controlled by the timing control section 22-1.

In a period A-1, which is one horizontal drive period 1Hf1 from a time t1 to a time t3, the following operations are performed. More specifically, at the time t1, the load state of the source driver 23-1 is set to the on-state. While the on-state is continuing, data Df1 is written into the source driver 23-1. In other words, when the load state of the source driver 23-1 is set to the off-state, writing of the data Df1 into the source driver 23-1 finishes. Then, at the time t2, the state of the gate driver 24-1 is set to the on-state. Accordingly, the data Df1 that is written into the source driver 23-1 is sequentially output in a period from the time t2 to the time t3.

Similar operations are also performed in the subsequent period A-2, which is one horizontal drive period 1Hf1 from the time t3 to a time t4, and in a period A-3, which is one horizontal drive period 1Hf1 from the time t4 to a time t5.

Fig. 5 is a timing diagram for explaining the example in which the pair of the source driver 23-3 and the gate driver 24-3 is driven.

A timing chart with an item "Source 23-3 Data" that is shown in the top row of Fig. 5 is a timing chart of data that is to be written into the source driver 23-3, i.e., data corresponding to the video signal having the scanning frequency of f3 Hz. A timing chart with an item "Source 23-3 Load" that is shown in the middle row of Fig. 5 is a timing chart of a signal showing a load state (on-state/off-state) of the source driver 23-3. A timing chart with an item "Gate 24-3" that is shown in the bottom row of Fig. 5 is a timing chart of a signal showing a state (on-state/off-state) of the gate driver 24-3.

Note that times t1 to t5 shown in Fig. 5 are the same as those shown in Fig. 4.

Operations based on the signals that are shown in the respective timing charts are controlled by the timing control section 22-3.

In a period B-1, which is one horizontal drive period 1Hf3 from the time t1 to the time t4 (for example, that is a period which is twice longer than one horizontal drive period 1Hf1 shown in Fig. 4), the following operations are performed. More specifically, at the time t1, the load state of the source driver 23-3 is set to the on-state. While the on-state is continuing, data Df3 is written into the source driver 23-3. In other words, when the load state of the source driver 23-3 is set to the off-state, writing of the data Df3 into the source driver 23-3 finishes. Then, at a time t11, the state of the gate driver 24-3 is set to the on-state. Accordingly, the data Df3 that is written into the source driver 23-3 is sequentially output in a period from the time t11 to the time t4.

Similar operations are also performed in the subsequent period B-2, which is one horizontal drive period 1Hf1 that starts from the time t4.

As described above with reference to Figs. 4 and 5, in the example shown in Fig. 3, the video signals that are to be displayed in the respective display regions which are obtained by splitting the display screen of the TFT liquid crystal display panel 25 in four, i.e., the video signals having the different scanning frequencies, are driven separately from one another.

As described above, the information processing device according to the embodiment of the present invention is described with reference to Figs. 3 to 5. As a matter of course, although the equation n = 4 holds true regarding the number of display regions n using split screen in the present embodiment, the number of display regions is not limited to four.

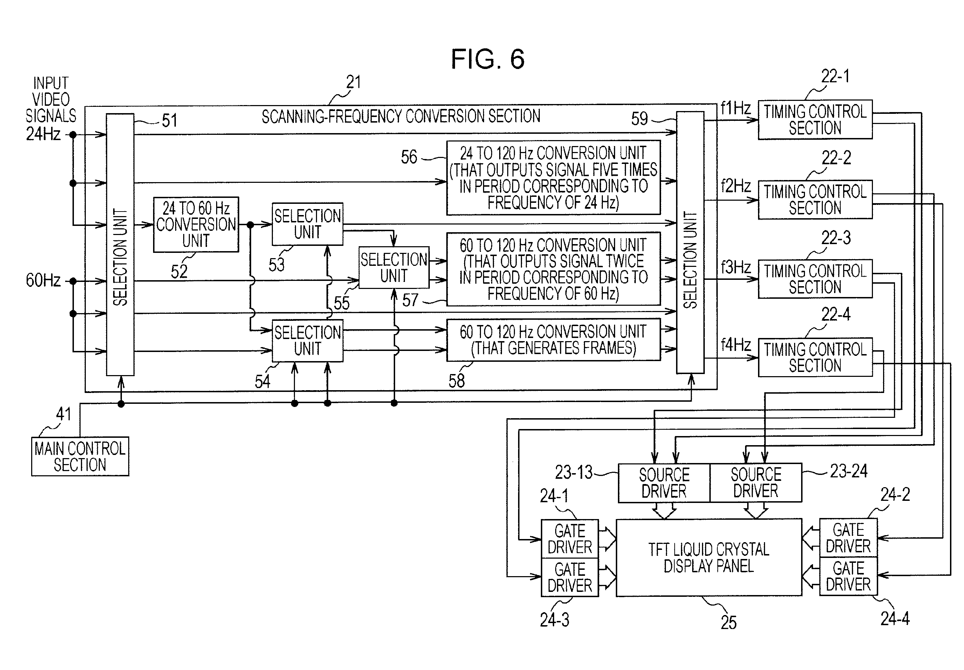

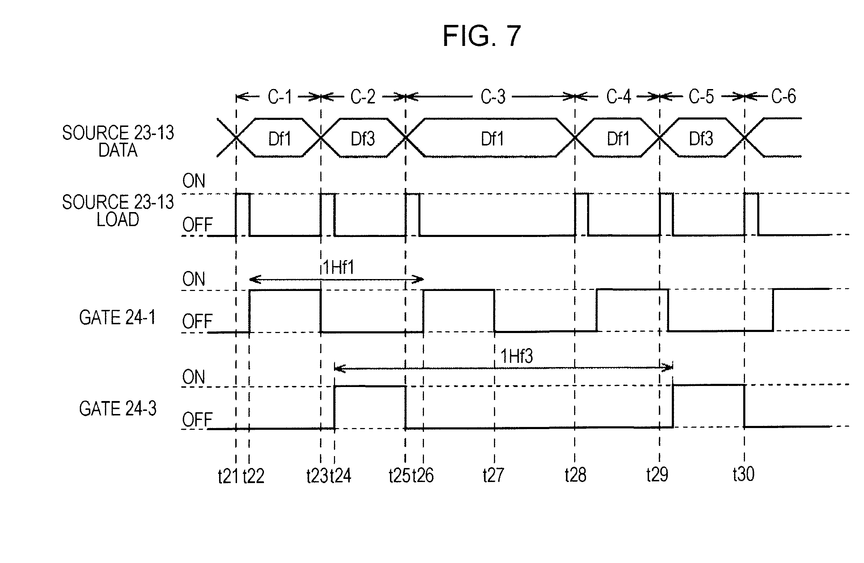

Next, an information processing device according to another embodiment of the present invention, which is different from the example shown in Fig. 3, will be described with reference to Figs. 6 and 7.

Fig. 6 is a functional block diagram showing a detailed example, which is different from the example shown in Fig. 3, of the functional configuration of the information processing device of the example shown in Fig. 2.

In Fig. 6, elements identical to those shown in Fig. 3 are designated by the same reference numerals, and the description thereof is appropriately omitted.

In the example shown in Fig. 6, as in the example shown in Fig. 3, it is supposed that the number of display regions n using split screen of the TFT liquid crystal display panel 25 is four. Furthermore, in the example shown in Fig. 6, each of the scanning frequencies of input video signals is converted from 24 Hz or 60 Hz to 24 Hz, 60 Hz, or 120 Hz.

Note that, although a ratio of the number of source drivers 23 that are included in the TFT liquid crystal display panel 25 to the number of gate drivers 24 that are included in the TFT liquid crystal display panel 25 is 1:1 in the example shown in Fig. 3, the ratio is 1:2 in the example shown in Fig. 6. In other words, in the example shown in Fig. 6, the four gate drivers 24-1 to 24-4 are provided for two source drivers 23-13 and 23-24 on the TFT liquid crystal display panel 25.

With this configuration, the timing control section 22-1 supplies the supplied video signal having the scanning frequency of f1 Hz to the source driver 23-13 and the gate driver 24-1. Accordingly, a video corresponding to the input video signal having the scanning frequency of f1 Hz is displayed, in accordance with control performed by the source driver 23-13 and the gate driver 24-1, in the upper-left display region among the display regions that are obtained by splitting the display screen of the TFT liquid crystal display panel 25 in four.

The timing control section 22-2 supplies the supplied video signal having the scanning frequency of f2 Hz to the source driver 23-24 and the gate driver 24-2. Accordingly, a video corresponding to the input video signal having the scanning frequency of f2 Hz is displayed, in accordance with control performed by the source driver 23-24 and the gate driver 24-2, in the upper-right display region among the display regions that are obtained by splitting the display screen of the TFT liquid crystal display panel 25 in four.

The timing control section 22-3 supplies the supplied video signal having the scanning frequency of f3 Hz to the source driver 23-13 and the gate driver 24-3. Accordingly, a video corresponding to the input video signal having the scanning frequency of f3 Hz is displayed, in accordance with control performed by the source driver 23-13 and the gate driver 24-3, in the lower-left display region among the display regions that are obtained by splitting the display screen of the TFT liquid crystal display panel 25 in four.

The timing control section 22-4 supplies the supplied video signal having the scanning frequency of f4 Hz to the source driver 23-24 and the gate driver 24-4. Accordingly, a video corresponding to the input video signal having the scanning frequency of f4 Hz is displayed, in accordance with control performed by the pair of the source driver 23-24 and the gate driver 24-4, in the lower-right display region among the display regions that are obtained by splitting the display screen of the TFT liquid crystal display panel 25 in four.

In other words, in the example shown in Fig. 6, the one source driver 23-13 and the two gate drivers 24-1 and 24-3 are considered as a group. Similarly, the one source driver 23-24 and the two gate drivers 24-2 and 24-4 are considered as a group.

Note that configurations other than the above-described configuration in the example shown in Fig. 6 are the same as those in the example shown in Fig. 3. Thus, description of the configurations is omitted.

Next, an example in which one of the groups in the example shown in Fig. 6, i.e., the group of the one source driver 23-13 and the two gate drivers 24-1 and 24-3, is driven will be described with reference to Fig. 7.

More specifically, Fig. 7 is a timing diagram for explaining the example in which the group of the one source driver 23-13 and the two gate drivers 24-1 and 24-3 is driven.

A timing chart with an item "Source 23-13 Data" that is shown in the first row from the top of Fig. 7 is a timing chart of data that is to be written into the source driver 23-13, i.e., data corresponding to the video signal having the scanning frequency of f1 Hz or data corresponding to the video signal having the scanning frequency of f3 Hz. A timing chart with an item "Source 23-13 Load" that is shown in the second row from the top of Fig. 7 is a timing chart of a signal showing a load state (on-state/off-state) of the source driver 23-13. A timing chart with an item "Gate 24-1" that is shown in the third row from the top of Fig. 7 is a timing chart of a signal showing a state (on-state/off-state) of the gate driver 24-1. A timing chart with an item "Gate 24-3" that is shown in the fourth row (the bottom row) from the top of Fig. 7 is a timing chart of a signal showing a state (on-state/off-state) of the gate driver 24-3.

Operations based on the signals that are shown in the respective timing charts are controlled by the timing control sections 22-1 and 22-3.

In a period C-1 from a time t21 to a time t23, the following operations are performed. More specifically, at the time t21, the load state of the source driver 23-13 is set to the on-state. While the on-state is continuing, the data Df1 corresponding to the video signal having the scanning frequency of f1 Hz is written into the source driver 23-13. In other words, when the load state of the source driver 23-13 is set to the off-state, writing of the data Df1 into the source driver 23-13 finishes. Then, at the time t22, the state of the gate driver 24-1 is set to the on-state. Accordingly, the data Df1 that is written into the source driver 23-13 is sequentially output in a period from the time t22 to the time t23.

In this manner, in the period C-1, the data Df1 corresponding to the video signal having the scanning frequency of f1 Hz is written into one line of the upper-left display region among the display regions that are obtained by splitting the display screen of the TFT liquid crystal display panel 25 in four. Thus, the period C-1 falls within one horizontal drive period 1Hf1.

In the next period C-2, i.e., the period C-2 from the time t23 to a time t25, the following operations are performed. More specifically, at the time t23, the load state of the source driver 23-13 is set to the on-state. While the on-state is continuing, the data Df3 corresponding to the video signal having the scanning frequency of f3 Hz is written into the source driver 23-13. In other words, when the load state of the source driver 23-13 is set to the off-state, writing of the data Df3 into the source driver 23-13 finishes. Then, at the time t24, the state of the gate driver 24-3 is set to the on-state. Accordingly, the data Df3 that is written into the source driver 23-13 is sequentially output in a period from the time t24 to the time t25.

In this manner, in the period C-2, the data Df3 corresponding to the video signal having the scanning frequency of f3 Hz is written into one line of the lower-left display region among the display regions that are obtained by splitting the display screen of the TFT liquid crystal display panel 25 in four. Thus, the period C-2 falls within one horizontal drive period 1Hf3.

In the next period C-3, i.e., the period C-3 from the time t25 to a time t28, the following operations are performed. More specifically, at the time t25, the load state of the source driver 23-13 is set to the on-state. While the on-state is continuing, the data Df1 corresponding to the video signal having the scanning frequency of f1 Hz is written into the source driver 23-13. In other words, when the load state of the source driver 23-13 is set to the off-state, writing of the data Df1 into the source driver 23-13 finishes. Then, at the time t26, the state of the gate driver 24-1 is set to the on-state, and, while the on-state is continuing, the data Df1 that is written into the source driver 23-13 is sequentially output. In other words, at the time t27, when the state of the gate driver 24-1 is set to the off-state, outputting of the data Df1 finishes.

In this manner, in the period C-3, the data Df1 corresponding to the video signal having the scanning frequency of f1 Hz is written into one line of the upper-left display region among the display regions that are obtained by splitting the display screen of the TFT liquid crystal display panel 25 in four. Thus, the period C-3 falls within one horizontal drive period 1Hf1.

After that, when the period C-3 finishes at the time t28 and a period C-4 starts, operations that are the same as those that were performed in the period C-1 are performed. When the period C-4 finishes at a time t29 and a period C-5 starts, operations that are the same as those that were performed in the period C-2 are performed. When the period C-5 finishes at a time t30 and a period C-6 starts, operations that are the same as those that were performed in the period C-3 are performed.

In other words, the operations that are performed in the periods C1 to C3 are grouped as a unit, and the unit of the operations is repeated.

As described above, the two examples, i.e., the example shown in Fig. 3 and the example shown in Fig. 6, are described as embodiments of the information processing device of the example shown in Fig. 2. In the example shown in Fig. 3, one source driver 23 and one gate driver 24 are considered as a pair, and it is necessary that the number of such pairs be equal to the number of display regions n using split screen. On the other hand, in the example shown in Fig. 6, one common source driver 23 is used for two gate drivers 24. In other words, two source drivers 23 can be removed in the example shown in Fig. 6, compared with the example shown in Fig. 3. As described with reference to Fig. 7, the reason for this is that supply of signals is controlled so that the signals can be supplied from the common source driver 23 to the two gate drivers 24 in the respective horizontal one-line drive periods of the gate drivers 24 in such a manner that the signals are prevented from overlapping one another using time division.

Accordingly, when supply of signals is controlled so that the signals can be supplied from the common source driver 23 to a plurality of gate drivers 24 in the respective horizontal one-line drive periods of the plurality of gate drivers 24 in such a manner that the signals are prevented from overlapping one another using time division, the number of necessary source drivers 23 can be reduced.

In other words, as long as timing at which the drivers are driven can be controlled using time division so that the drivers are not simultaneously driven, the information processing device can be configured with a ratio of the number of source drivers 23 to the number of gate drivers 24 that is set to 1:x for the number of display regions n using split screen of the TFT liquid crystal display panel 25 (wherein x is an integer value that is equal to or smaller than n).

However, compared with a case in which the drivers are driven separately from one another at different scanning frequencies, in the case in which timing at which the drivers are driven can be controlled using time division so that the drivers are not simultaneously driven, the actual drive time is reduced. Thus, it is necessary to consider an influence to a response transition state of the TFT liquid crystal display panel 25.

Furthermore, because control of timing at which the drivers are driven is preferentially performed, it is necessary to consider imposition of limitations on assignment of scanning frequencies to the display regions using split screen.

Note that, in the examples shown in Figs. 3 and 6, because the respective video signals having different scanning frequencies are displayed separately from one another in the display regions that are obtained by splitting the display screen of the TFT liquid crystal display panel 25 in n, a plurality of source drivers 23 and a plurality of gate drivers 24 are used. However, when a driver having a plurality of control lines for one pixel is used, the number of necessary drivers can be reduced.

Furthermore, a liquid-crystal-type display device (a display device including the TFT liquid crystal display panel 25 in each of the examples shown in Figs. 3 and 6) is described above as a display device in which displaying is controlled by the information processing device according to the embodiment of the present invention. However, the present invention is not limited to the liquid-crystal-type display device, and may be applied to the following display devices. More specifically, the present invention can be applied to a display device in which displaying is performed in units of frames or fields constituting a moving image, in which a plurality of pixels that form a frame are configured using display elements, and in which a displayed image can be hold using at least some of the display elements. Note that, hereinafter, such display elements are referred to as "hold-type display elements", and a display device in which a display screen is configured using the display elements is referred to as a "hold-type display device". In other words, the liquid-crystal-type display device is only an example of the hold-type display device, and the present invention can be applied to any hold-type display device.

Additionally, the present invention can be applied not only to the hold-type display device but also a flat display device of a spontaneously light emitting type in which organic electro luminescent (EL) devices are used as light-emitting elements or the like. In other words, the present invention can be applied to any display device in which a plurality of pixels form an image, and which includes display elements that display the plurality of pixels. Note that such a display device is referred to as a "pixel-type display device". Herein, in the pixel-type display device, one display element does not necessarily correspond to one pixel.

In other words, application of the present invention is not limited to a display device using a display mode.

The present application contains subject matter related to that disclosed in Japanese Priority Patent Application JP 2008-160296 filed in the Japan Patent Office on June 19, 2008, the entire content of which is hereby incorporated by reference.

It should be understood by those skilled in the art that various modifications, combinations, sub-combinations and alterations may occur depending on design requirements and other factors insofar as they are within the scope of the appended claims or the equivalents thereof.

## Claims

1. An information processing device comprising:
an input section configured to input a plurality of types of video signals; and
a timing controller configured to perform, separately for each of split regions that are obtained by splitting a display region of a display device, control of timing at which a corresponding one of videos corresponding to the plurality of types of video signals is displayed in the split region.

2. The information processing device according to Claim 1,
wherein the display device is a pixel-type display device,
wherein displaying with display elements constituting the pixel-type display device is controlled by driving source drivers and gate drivers,
wherein each of the source drivers and each of the gate drivers are assigned to a corresponding one of the split regions, and
wherein the timing controller controls, for each of the split regions, timing at which a corresponding one of the source drivers and a corresponding one of the gate drivers are driven.

3. The information processing device according to Claim 1 or 2,
wherein n split regions exist as the split regions (wherein n is an integer value that is equal to or larger than two),
wherein each of the gate drivers is assigned as a gate driver for a corresponding one of the n split regions,
wherein one of the source drivers is assigned as a source driver for a group of x split regions among the n split regions (wherein x is an integer value that is equal to or larger than two and that is equal to or smaller than n), and
wherein the timing controller performs control of supplying signals from the source driver which is assigned to the x split regions to the gate drivers in respective horizontal one-line drive periods of the gate drivers in such a manner that the signals are divided using time division and prohibited from overlapping one another, each of the gate drivers being assigned to a corresponding one of the x split regions.

4. The information processing device according to any one of Claims 1 to 3, wherein the plurality of types of video signals include two or more video signals having different scanning frequencies.

5. The information processing device according to any one of Claims 1 to 4, further comprising a conversion section configured to convert a scanning frequency of an input video signal.

6. The information processing device according to Claim 5, wherein the conversion section converts the scanning frequency of the input video signal using a plurality of techniques as techniques for converting the scanning frequency of the input video signal, and selects, from among a plurality of types of video signals that are obtained as a result of conversion, a video signal that is to be displayed in each of the split regions.

7. An information processing method comprising the steps of:
causing an information processing device to input a plurality of types of video signals; and
causing the information processing device to perform, separately for each of split regions that are obtained by splitting a display region of a display device, control of timing at which a corresponding one of videos corresponding to the plurality of types of video signals is displayed in the split region.

8. A storage medium recording a program that causes a computer to perform the steps of:
inputting a plurality of types of video signals; and
performing, separately for each of split regions that are obtained by splitting a display region of a display device, control of timing at which a corresponding one of videos corresponding to the plurality of types of video signals is displayed in the split region.
